(19) Europäisches Patentamt
European Patent Office
Office européen des brevets

(11) **EP 4 509 199 A1**

(12) **EUROPEAN PATENT APPLICATION**

(43) Date of publication:
**19.02.2025 Bulletin 2025/08**

(21) Application number: **24195256.3**

(22) Date of filing: **19.08.2024**

(51) International Patent Classification (IPC):
**B01D 35/143** (2006.01)   **B01D 37/04** (2006.01)
**B01D 46/00** (2022.01)   **B01D 46/44** (2006.01)
**E04H 4/16** (2006.01)

(52) Cooperative Patent Classification (CPC):
**B01D 35/143; B01D 37/046; B01D 46/0086;
B01D 46/446; E04H 4/16;** B01D 2201/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.08.2023 IL 30532223**

(71) Applicant: **Maytronics Ltd.
1935000 Kibbutz Yizrael (IL)**

(72) Inventor: **GOLDENBERG, Gilad
Kfar saba 4434705 (IL)**

(74) Representative: **Noble, Frederick et al
Albright IP Limited
County House
Bayshill Road
Cheltenham, Glos. GL50 3BA (GB)**

(54) **ESTIMATING A STATUS OF A FLUID FILTER OF A CLEANING DEVICE**

(57)   There is provided a method for estimating a status of a fluid filter of a cleaning device, the method includes performing, at one or more measurement iterations, one or more first fluid pressure measurements of fluid within the cleaning device while the cleaning device actively moves fluid within the cleaning device; performing, at the one or more measurement iterations, one or more second fluid pressure measurements of fluid within the cleaning device while the cleaning device does not actively move fluid within the cleaning device; predicting a future status of the fluid filter, based on the one or more first fluid pressure measurements and the one or more second fluid pressure measurements; and responding to the predicting.

Performing, at one or more measurement iterations, one or more first fluid pressure measurements of fluid within the cleaning device while the cleaning device actively moves fluid within the cleaning device 12

Performing, at the one or more measurement iterations, one or more second fluid pressure measurements of fluid within the cleaning device while the cleaning device does not actively move fluid within the cleaning device 14

Predicting a future status of the fluid filter, based on the one or more first fluid pressure measurements and the one or more second fluid pressure measurements. 16

Responding to the predicting. 18

10

FIG. 1

EP 4 509 199 A1

**Description**

BACKGROUND

Cleaning devices include a filtering unit for filtering fluid. The filtering unit becomes clogged during filtering. The clogging may reduce the effectiveness of the cleaning.

There is a growing need to provide an effective solution for sending the status of the filtering unit.

SUMMARY

There may be provided a solution related to estimating a status of a fluid filter of a cleaning device.

According to a first aspect of the present invention, there may be provided a method for estimating a status of a fluid filter of a cleaning device, the method comprises:

performing, at one or more measurement iterations, one or more first fluid pressure measurements of fluid within the cleaning device while the cleaning device actively moves fluid within the cleaning device;

performing, at the one or more measurement iterations, one or more second fluid pressure measurements of fluid within the cleaning device while the cleaning device does not actively move fluid within the cleaning device;

predicting a future status of the fluid filter, based on the one or more first fluid pressure measurements and the one or more second fluid pressure measurements; and responding to the predicting.

The predicting may be executed by a machine learning process that was trained using information about fluid pressure measurements and filter fluid status.

The one or more first fluid pressure measurements may be executed while an impeller of the cleaning device is/was active. The one or more second fluid pressure measurements may be executed while the impeller is idle.

The one or more first fluid pressure measurements and/or the one or more second fluid pressure measurements may be executed while the cleaning device does not move.

The one or more first fluid pressure measurements may be at least two first fluid pressure measurements. The one or more second fluid pressure measurements may be at least two second fluid pressure measurements.

The predicting may be based on a change or changes over time of differences between sets of first and second fluid pressure measurements, optionally wherein different sets were taken at different measurement iterations, and/or optionally each set of first and second fluid measurements includes a first fluid pressure measurement and a second fluid pressure measurements taken at a same measurement iteration.

The predicting may be based on (a) a full value of a fluid pressure measurement, where the full value is obtained when the fluid filter is full, and/or on (b) an empty value of a fluid pressure measurement, where the empty value is obtained when the fluid filter is empty.

The responding may comprise generating an alert or a recommendation to a user of the cleaning device and wirelessly transmitting the alert or the recommendation.

The future status of the fluid filter may be a future rate of change in a fullness of the fluid filter.

The predicting may comprise either or both of:

(a) calculating a first pressure difference of a first fluid pressure measurement and a second fluid measurement of a first set taken at a first measurement iteration; and

(b) calculating a second pressure difference of a first fluid pressure measurement and a second fluid measurement of a second set taken at a second measurement iteration, the second measurement iteration follows the first measurement iteration.

The predicting may be based on (or also based on) (a) a full value of a fluid pressure measurement, where the full value is obtained when the fluid filter is full, and/or on (b) an empty value of a fluid pressure measurement, where the empty value is obtained when the fluid filter is empty.

The predicting may comprise calculating a normalized pressure rate by dividing (a) a first difference between an absolute value of the second pressure difference and an absolute value of the first pressure difference, by (b) a second difference between an absolute value of the full value and an absolute difference of the empty value.

The predicting may comprise calculating a third difference between an absolute value of the second pressure difference and an absolute value of the empty value; and/or may comprise calculating a fourth difference between an absolute value of the full value and an absolute value of the empty value.

The predicting may comprise (a) multiplying the normalized pressure rate by a coefficient to provide a product, and (b) adding the product to a ratio between the third difference and the fourth difference.

The future status of the fluid filter may be a future rate of change in a fullness of the fluid filter.

According to a second aspect of the present invention, there is provided a cleaning device, comprising:

a fluid filter;
a measurement unit; and
a processing circuit;
wherein the measurement unit is configured to:

perform, at one or more measurement iterations, one or more first fluid pressure measurements of fluid within the cleaning device while the cleaning device actively moves fluid within the cleaning device; and
perform, at the one or more measurement iterations, one or more second fluid pressure measurements of fluid within the cleaning device while the cleaning device does not actively move fluid within the cleaning device;

wherein the processing circuit is configured to:
predict a future status of the fluid filter, based on the one or more first fluid
pressure measurements and the one or more second fluid pressure measurements; and determine a response to the future status.

The processing circuit may be configured to predict the future status using a machine learning process that was trained using information about fluid pressure measurements and filter fluid status.

The measurement unit may be configured to perform the one or more first fluid pressure measurements while an impeller of the cleaning device is/was active. The measurement unit may be configured to perform the one or more second fluid pressure measurements while the impeller is idle.

The measurement unit may be configured to perform the one or more first fluid pressure measurements and/or the one or more second fluid pressure measurements while the cleaning device does not move.

The one or more first fluid pressure measurements may be at least two first fluid pressure measurements. The one or more second fluid pressure measurements may be at least two second fluid pressure measurements.

The processing circuit may be configured to predict the future status based on a change or changes over time of differences between sets of first and second fluid pressure measurements, optionally wherein different sets were taken at different measurement iteration, and/or optionally wherein each set of first and second fluid measurements includes a first fluid pressure measurement and a second fluid pressure measurements taken at a same measurement iteration.

The processing circuit may be configured to predict the future status also based on (a) a full value of a fluid pressure measurement, where the full value is obtained when the fluid filter is full, and/or on (b) an empty value of a fluid pressure measurement, where the empty value is obtained when the fluid filter is empty.

The cleaning device may comprise an alert unit that may be configured to generate, in response to the future status, an alert or a recommendation to a user of the cleaning device and optionally wirelessly transmit the alert or recommendation.

The future status of the fluid filter may be a future rate of change in a fullness of the fluid filter.

The processing circuit may be configured to predict the future status by either or both of:

(a) calculating a first pressure difference of a first fluid pressure measurement and a second fluid measurement of a first set taken at a first measurement iteration; and
(b) calculating a second pressure difference of a first fluid pressure measurement and a second fluid measurement of a second set taken at a second measurement iteration, the second measurement iteration follows the first measurement iteration.

The processing circuit may be configured to predict the future status based on (or also based on) (a) a full value of a fluid pressure measurement, where the full value is obtained when the fluid filter is full, and/or on (b) an empty value of a fluid pressure measurement, the empty value is obtained when the fluid filter is empty.

The processing circuit may be configured to predict the future status by calculating a normalized pressure rate by dividing (a) a first difference between an absolute value of the second pressure difference and an absolute value of the first pressure difference, by (b) a second difference between an absolute value of the full value and an absolute difference of the empty value.

The processing circuit may be configured to predict the future status by calculating a third difference between an absolute value of the second pressure difference and an absolute value of the empty value; and/or by calculating a fourth difference between an absolute value of the full value and an absolute value of the empty value.

The processing circuit may be configured to predict the future status by (a) multiplying the normalized pressure rate by a coefficient to provide a product, and (b) adding the product to a ratio between the third difference and the fourth difference.

The future status of the fluid filter may be a future rate of change in a fullness of the fluid filter.

According to a third aspect of the present invention, there is provided a non-transitory computer readable medium for estimating a status of a fluid filter of a cleaning device, the non-transitory computer readable medium stores instructions for:

> performing, at one or more measurement iterations, one or more first fluid pressure measurements of fluid within the cleaning device while the cleaning device actively moves fluid within the cleaning device;
> performing, at the one or more measurement iterations, one or more second fluid pressure measurements of fluid within the cleaning device while the cleaning device does not actively move fluid within the cleaning device;
> predicting a future status of the fluid filter, based on the one or more first fluid pressure measurements and the one or more second fluid pressure measurements; and responding to the predicting.

Any aspect of the invention may include any independently selected feature or independently selected combination of features from any other aspect or aspects of the invention.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

> FIG. 1 illustrates an example of a method;
> FIG. 2 illustrates an example of an cleaning system such as a pool cleaning robot; and
> FIG. 3 illustrates an example of a timing diagram.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

DESCRIPTION OF THE PREFERRED EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the Summary of the invention of the specification.

The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

The term "and/or" is additionally or alternatively.

The terms "control unit", "remote control device", "control device" and "mobile computer" are used in an interchangeable manner.

Any reference in the specification to a pool cleaning robot should be applied mutatis mutandis to a method that can be executed by the pool cleaning robot and to a computer readable medium that stores instructions to be executed by the pool cleaning robot.

Any reference in the specification to a mobile computer should be applied mutatis mutandis to a method that can be executed by the mobile computer and to a computer readable medium that stores instructions to be executed by the mobile computer.

Any reference in the specification to method should be applied mutatis mutandis to a pool cleaning robot and/or to a mobile computer that execute the method and/or to a computer readable medium that stores instructions that once executed result in an execution of the method.

Any reference in the specification to a non-transitory computer readable medium should be applied mutatis mutandis to a pool cleaning robot and/or a mobile computer capable of executing the instructions stored in the non-transitory computer readable medium and should be applied mutatis mutandis to method that may be executed by a pool cleaning robot and/or a mobile computer that reads the instructions stored in the non-transitory computer readable medium.

Because the illustrated embodiments of the present invention may for the most part, be implemented using electronic components, touch screens and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

The term fluid may mean liquid. Examples of devices that filter liquid may include pool related platforms (PRPs). A PRP is any platform that has a fluid filter and also may perform an operation related to a liquid of a pool - cleaning, changing chemical composition, monitoring, and the like. Examples of a PRP include a pool robot that differs from a pool cleaning robot (PCR), a PCR, a floating unit, a skimmer, and the like. Any example related a PCR may be applied mutatis mutandis, to any other PRP.

The term fluid may mean gas. Examples of devices that filter gas may include vacuum cleaners - autonomous, manual controller or automatic.

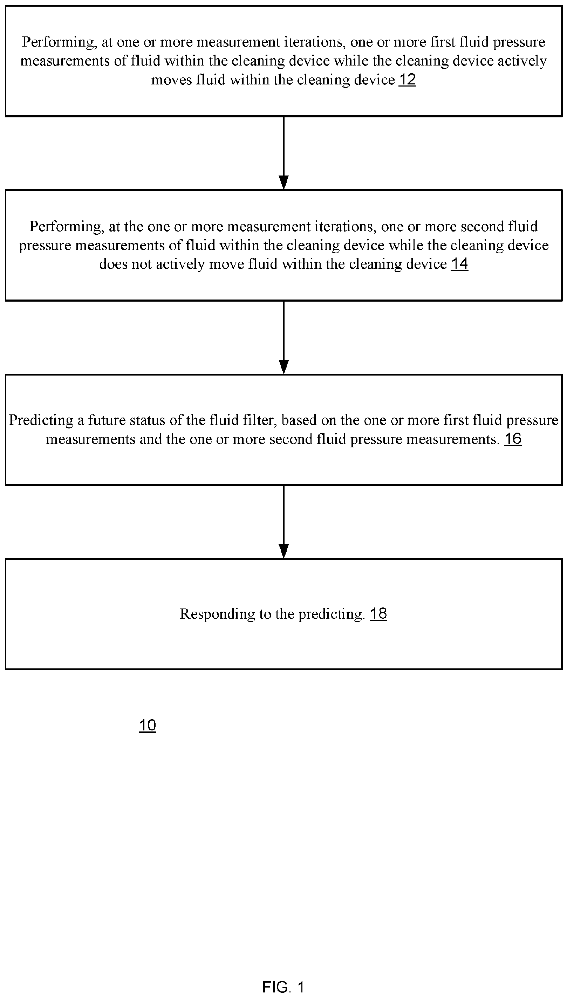

Figure 1 illustrates an example of method 10 for estimating a status of a fluid filter of a cleaning device.

Method 10 may start by step 12 of performing, at one or more measurement iterations, one or more first fluid pressure measurements of fluid within the cleaning device while the cleaning device actively moves fluid within the cleaning device.

Step 12 may be followed by step 14 of performing, at the one or more measurement iterations, one or more second fluid pressure measurements of fluid within the cleaning device while the cleaning device does not actively move fluid within the cleaning device.

Step 12 may be executed while an impeller of the cleaning device is active.

Step 14 may be executed while the impeller is idle.

Step 12 may be executed while the cleaning device does not move. Step 14 may be executed while the cleaning device does not move. Any pressure measurement may be executed a predefined delay after the cleaning device stopped moving - for example - in order to enable the cleaning device to stabilize. The predefined delay may be 1, 2, 3, 4, 5, 6 or more than 6 seconds.

Method 12 and/or 14 may be at any time following a beginning of a cleaning cycle - for example - 1-10 minutes after the beginning of the cleaning cycle, after 1-10 hours from the beginning of the cleaning cycle, and the like.

Method 10 may include not executing step 12 and/or step 14 when one or more preliminary conditions are not fulfilled.

Method 10 may include ignoring fluid pressure measurements obtained during step 12 and/or step 14 when one or more preliminary conditions are not fulfilled.

The one or more preliminary conditions may include, for example, having the cleaning device is oriented (for example due to a sloped bottom of a pool, due to having the cleaning device being partially positioned on a step or protrusion) at an angle that is above a certain threshold - for example above 10, 15, 20, 25, 30 degrees and the like).

Method 10 may ignore fluid pressure measurements when the variance between consecutive measurements exceed a variance threshold.

The one or more first fluid pressure measurements may include at least two first fluid pressure measurements. The one or more second fluid pressure measurements may be at least two second fluid pressure measurements.

Step 14 may be followed by step 16 of predicting a future status of the fluid filter, based on the one or more first fluid pressure measurements and the one or more second fluid pressure measurements.

The future status of the fluid filter may be a future rate of change in a fullness of the fluid filter.

Regarding step 16 - at least one of the following is true:

a. The predicting may be executed by a machine learning process that was trained using information about fluid pressure measurements and filter fluid status. The information may be a mapping between fluid pressure measurements and filter fluid status.

b. The predicting may be executed by applying one or more rules - and without using a machine learning process that was trained using information about fluid pressure measurements and filter fluid status.

c. The predicting may be based on a changes over time of differences between sets of first and second fluid pressure measurements. Different sets were taken at different measurement iterations, and each set of first and second fluid measurements includes a first fluid pressure measurement and a second fluid pressure measurement taken at a same measurement iteration.

d. The predicting may be based on (a) a full value of a fluid pressure measurement, the full value is obtained when the fluid filter is full, and on (b) an empty value of a fluid pressure measurement, the empty value is obtained when the fluid filter is empty.

e. The predicting may include: (a) calculating a first pressure difference of a first fluid pressure measurement and a second fluid measurement of a first set taken at a first measurement iteration, and (b) calculating a second pressure difference of a first fluid pressure measurement and a second fluid measurement of a second set taken at a second measurement iteration, the second measurement iteration follows the first measurement iteration.

f. The predicting may include calculating a normalized pressure rate by dividing (a) a first difference between an absolute value of the second pressure different and an absolute value of the first pressure difference, by (b) a second difference between an absolute value of the full value and an absolute difference of the empty value.

g. The predicting may include calculating a third difference between an absolute value of the second pressure difference and an absolute value of the empty value.

h. The predicting may include calculating a fourth difference between an absolute value of the full value and an absolute value of the empty value.

i. The predicting may include multiplying the normalized pressure rate by a coefficient to provide a product.

j. The predicting may include adding the product to a ratio between the third difference and the fourth difference.

An example of an execution of step 16 is provided below:

a. Calculating a first pressure difference (DeltaP_1) of a first fluid pressure measurement (P1_1) and a second fluid measurement (P2_1) taken at a first measurement iteration: DeltaP_1 = P1_1 - P2_1.

b. Calculating a second pressure difference (DeltaP_2) of a first fluid pressure measurement (P1_2) and a second fluid measurement (P2_2) taken at a second measurement iteration, the second measurement iteration follows the first measurement iteration: DeltaP_2 = P2_1 - P2_2.

c. The predicting may include calculating a normalized pressure rate (Norm_rate) by dividing (a) a first difference between an absolute value of the second pressure different and an absolute value of the first pressure difference, by (b) a second difference between an absolute value of the full value (Pfull) and an absolute difference of the empty value (Pempty): Norm_rate= [abs(DeltaP_2)-abs(DeltaP_1)]/[abst(Pfull) - abst(Pempty)].

d. The predicting may include calculating a third difference between an absolute value of the second pressure difference and an absolute value of the empty value: Delta_3 = abs(DeltaP_2) - abs(Pempty).

e. The predicting may include calculating a fourth difference between an absolute value of the full value and an absolute value of the empty value:

$$Delta\_4 = abs(Pfull) - abs(Pempty).$$

f. The predicting may include multiplying the normalized pressure rate by a coefficient to provide a product: Product = Norm_rate * Factor

g. The predicting may include adding the product to a ratio between the third difference and the fourth difference:

$$Future\_rate= Product + (Delta\_3/Delta\_4).$$

Step 16 may be followed by step 18 of responding to the predicting.

The responding may include generating an alert or a recommendation to a user of the cleaning device and wirelessly transmitting the alert or the recommendation.

The responding may include changing at least one parameter of a cleaning iteration (for example changing the duration).

For Example, assuming that step 16 includes calculating Future_rate.

a. When finding that Future_rate ranges between 50% to 120%. This may mean that the fluid filter will probably be close to full or full and clean all dirt at the end of a cleaning cycle.

b. When finding that Future_rate exceeds 100% and Norm_rate is smaller than 5%. This may mean that the pool (being cleaned by the cleaning device) is not dirty - but the fluid filter is already more than half full - and the fluid filter will be full before the end of the cleaning cycle and may not clean all dirt.

c. When finding that Future_rate exceeds 100% and Norm_rate exceeds 5%. This may mean that the pool (being cleaned by the cleaning device) is dirty - and the fluid filter will be less than half full before the end of the cleaning cycle and may not clean all dirt.

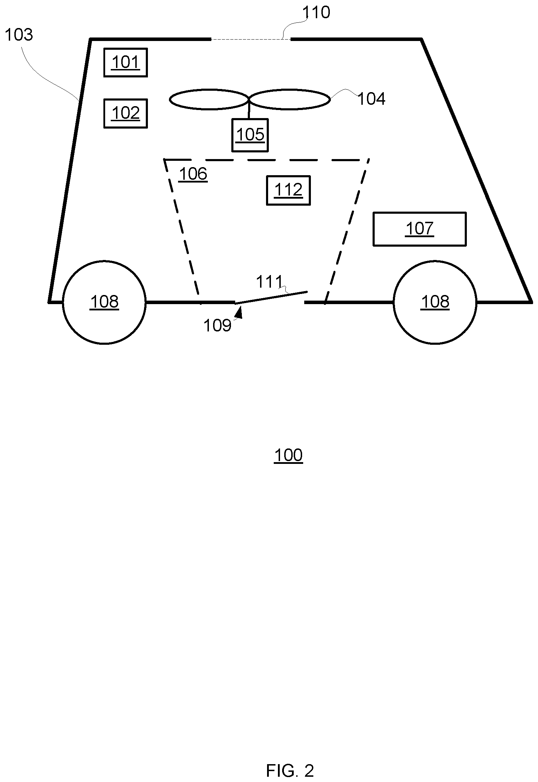

Figure 2 illustrates an example of a cleaning device that is a pool cleaning robot (PCR) 100.

PCR 100 may include processing circuit 101, controller 102 for controlling an operation of the PCR, housing 103, impeller 104, pump motor 105 for rotating the impeller 104, fluid filter 106, drive motor 107, wheels 108, first and second fluid openings 109 and 110, valve 111, and a sensing unit that may include at least one sensor such as sensor 112.

The pump motor 105 may rotate the impeller 104 at a first direction thereby forcing fluid to enter the pool cleaning robot from first opening 109, pass through valve 111, be filtered by fluid filter 106 and exit the PCR via second opening 110. Sensor 112 is configured to sense the pressure of the fluid - and is located within a fluid path between the first and second openings.

The pump motor may rotate the impeller in a second direction that is opposite to the first direction during a backwash operation.

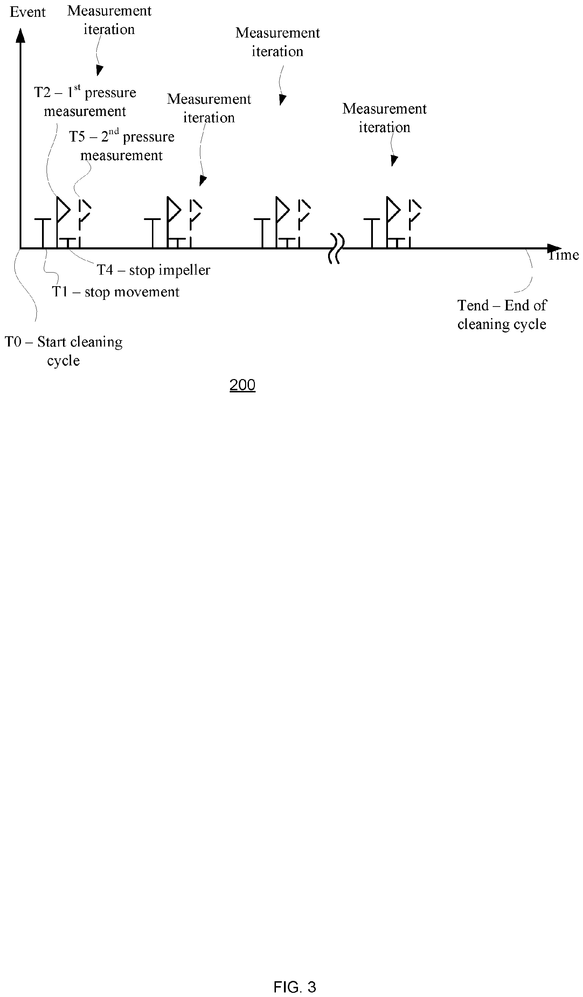

Figure 3 illustrates an example of a timing diagram 200 that illustrates multiple measurement iterations. The multiple measurement iterations may occur between a start of the cleaning cycle to an end of the cleaning cycle. A measurement iteration may include stopping the movement of the cleaning device, performing a first fluid pressure measurement while the impeller is rotated, stopping the impeller, and performing a second fluid pressure measurement. The impeller is rotated again after the performing of the second fluid pressure measurement. The cleaning device may move following the performance of the second fluid pressure measurement.

Any reference to any one of "including" or "comprising" or "having" may be applied mutatis mutandis to any one of "consisting" and "consisting essentially of". For example- any method may include at least the steps included in the figures and/or in the specification, only the steps included in the figures and/or the specification. The same applies to the pool cleaning robot and the mobile computer.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front, " "back, " "top, " "bottom, " "over, " "under " and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems' .

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one as or more than one. Also, the use of introductory phrases such as "at least one " and "one or more " in the claims should not be construed to imply that the introduction of another claim element by the indefinite articles "a " or "an " limits any particular claim containing such introduced claim element to inventions containing only one such element, even when the same claim includes the introductory phrases "one or more " or "at least one " and indefinite articles such as "a" or "an. " The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements the mere fact that certain measures are recited in mutually different claims does not indicate that a combination of these measures cannot be used to advantage.

Any system, apparatus or device referred to this patent application includes at least one hardware component.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

**Claims**

1.  A method for estimating a status of a fluid filter of a cleaning device, the method comprises:

    performing, at one or more measurement iterations, one or more first fluid pressure measurements of fluid within the cleaning device while the cleaning device actively moves fluid within the cleaning device;
    performing, at the one or more measurement iterations, one or more second fluid pressure measurements of fluid within the cleaning device while the cleaning device does not actively move fluid within the cleaning device;
    predicting a future status of the fluid filter, based on the one or more first fluid pressure measurements and the one or more second fluid pressure measurements; and
    responding to the predicting.

2.  The method according to claim 1 wherein the predicting is executed by a machine learning process that was trained using information about fluid pressure measurements and filter fluid status.

3.  The method according to claim 1 wherein the one or more first fluid pressure measurements are executed while an impeller of the cleaning device was active; and wherein the one or more second fluid pressure measurements are executed while the impeller is idle.

4.  The method according to claim 1 wherein the one or more first fluid pressure measurements and the one or more second fluid pressure measurements are executed while the cleaning device does not move.

5.  The method according to claim 1, wherein the one or more first fluid pressure measurements are at least two first fluid pressure measurements, wherein the one or more second fluid pressure measurements are at least two second fluid pressure measurements; wherein the predicting is based on a changes over time of differences between sets of first and second fluid pressure measurements, different sets were taken at different measurement iterations, and each set of first and second fluid measurements includes a first fluid pressure measurement and a second fluid pressure measurements taken at a same measurement iteration.

6.  The method according to claim 1, wherein the predicting comprises:

    (a) calculating a first pressure difference of a first fluid pressure measurement and a second fluid measurement of a first set taken at a first measurement iteration; and
    (b) calculating a second pressure difference of a first fluid pressure measurement and a second fluid measurement of a second set taken at a second measurement iteration, the second measurement iteration follows the first measurement iteration;

wherein the predicting is also based on (a) a full value of a fluid pressure measurement, the full value is obtained when the fluid filter is full, and on (b) an empty value of a fluid pressure measurement, the empty value is obtained when the fluid filter is empty.

7. The method according to claim 7, wherein the predicting comprises calculating a normalized pressure rate by dividing (a) a first difference between an absolute value of the second pressure different and an absolute value of the first pressure difference, by (b) a second difference between an absolute value of the full value and an absolute difference of the empty value.

8. The method according to claim 8, wherein the predicting comprises calculating a third difference between an absolute value of the second pressure difference and an absolute value of the empty value; and calculating a fourth difference between an absolute value of the full value and an absolute value of the empty value.

9. The method according to claim 9, wherein the predicting comprises (a) multiplying the normalized pressure rate by a coefficient to provide a product, and (b) adding the product to a ratio between the third difference and the fourth difference.

10. A cleaning device, comprising:

a fluid filter;
a measurement unit; and
a processing circuit;
wherein the measurement unit is configured to:

perform, at one or more measurement iterations, one or more first fluid pressure measurements of fluid within the cleaning device while the cleaning device actively moves fluid within the cleaning device; and
perform, at the one or more measurement iterations, one or more second fluid pressure measurements of fluid within the cleaning device while the cleaning device does not actively move fluid within the cleaning device;

wherein the processing circuit is configured to:

predict a future status of the fluid filter, based on the one or more first fluid pressure measurements and the one or more second fluid pressure measurements; and
determine a response to the future status.

11. The cleaning device according to claim 10, wherein the processing circuit is configured to predict the future status by: (a) calculating a first pressure difference of a first fluid pressure measurement and a second fluid measurement of a first set taken at a first measurement iteration, (b) calculating a second pressure difference of a first fluid pressure measurement and a second fluid measurement of a second set taken at a second measurement iteration, the second measurement iteration follows the first measurement iteration; and .
wherein the processing circuit is configured to predict the future status also based on (a) a full value of a fluid pressure measurement, the full value is obtained when the fluid filter is full, and on (b) an empty value of a fluid pressure measurement, the empty value is obtained when the fluid filter is empty.

12. The cleaning device according to claim 11, wherein the processing circuit is configured to predict the future status by calculating a normalized pressure rate by dividing (a) a first difference between an absolute value of the second pressure different and an absolute value of the first pressure difference, by (b) a second difference between an absolute value of the full value and an absolute difference of the empty value.

13. The cleaning device according to claim 12, wherein the processing circuit is configured to predict the future status by calculating a third difference between an absolute value of the second pressure difference and an absolute value of the empty value; and calculating a fourth difference between an absolute value of the full value and an absolute value of the empty value.

14. The cleaning device according to claim 13, wherein the processing circuit is configured to predict the future status by (a) multiplying the normalized pressure rate by a coefficient to provide a product, and (b) adding the product to a ratio between the third difference and the fourth difference.

15. A non-transitory computer readable medium for estimating a status of a fluid filter of a cleaning device, the non-transitory computer readable medium stores instructions for:

performing, at one or more measurement iterations, one or more first fluid pressure measurements of fluid within the cleaning device while the cleaning device actively moves fluid within the cleaning device;
performing, at the one or more measurement iterations, one or more second fluid pressure measurements of fluid within the cleaning device while the cleaning device does not actively move fluid within the cleaning device;
predicting a future status of the fluid filter, based on the one or more first fluid pressure measurements and the one or more second fluid pressure measurements; and
responding to the predicting.

Performing, at one or more measurement iterations, one or more first fluid pressure measurements of fluid within the cleaning device while the cleaning device actively moves fluid within the cleaning device 12

Performing, at the one or more measurement iterations, one or more second fluid pressure measurements of fluid within the cleaning device while the cleaning device does not actively move fluid within the cleaning device 14

Predicting a future status of the fluid filter, based on the one or more first fluid pressure measurements and the one or more second fluid pressure measurements. 16

Responding to the predicting. 18

10

FIG. 1

110

103

101

102

104

105

106

112

107

108

109

111

108

100

FIG. 2

FIG. 3

Europäisches
Patentamt
European
Patent Office
Office européen
des brevets

# EUROPEAN SEARCH REPORT

Application Number

EP 24 19 5256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 922 914 B1 (VERDEGAN BARRY M [US] ET AL) 12 April 2011 (2011-04-12) * figure 1 * | 1-15 | INV. B01D35/143 B01D37/04 B01D46/00 B01D46/44 E04H4/16 |
| A | DE 198 28 933 A1 (BOSCH GMBH ROBERT [DE]) 5 January 2000 (2000-01-05) * figure 2 * | 1-15 | |
| A | AT 392 158 B (VOEST ALPINE AG [AT]) 11 February 1991 (1991-02-11) * figures 1-8 * | 1-15 | |
| A | US 2016/116392 A1 (CARPENTER RICHARD ANDREW [US] ET AL) 28 April 2016 (2016-04-28) * figure 2 * | 1-15 | |

| | | | TECHNICAL FIELDS SEARCHED (IPC) |
|---|---|---|---|
| | | | B01D E04H |

The present search report has been drawn up for all claims

| Place of search | Date of completion of the search | Examiner |
|---|---|---|
| Munich | 20 December 2024 | Skowronski, Maik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 5256

This annex lists the patent family members relating to the patent documents cited in  the above-mentioned European search report.
The members are as contained in the European Patent Office EDP file on
The European Patent Office is in no way liable for these particulars which are merely given for the purpose of information.

20-12-2024

| Patent document cited in search report | | Publication date | Patent family member(s) | | Publication date |
|---|---|---|---|---|---|
| US 7922914 | B1 | 12-04-2011 | NONE | | |
| DE 19828933 | A1 | 05-01-2000 | DE | 19828933 A1 | 05-01-2000 |
| | | | ES | 2165764 A1 | 16-03-2002 |
| AT 392158 | B | 11-02-1991 | NONE | | |
| US 2016116392 | A1 | 28-04-2016 | NONE | | |

For more details about this annex : see Official Journal of the European Patent Office, No. 12/82